# FASCICULE DE BREVET EUROPEEN

(11) **EP 4 129 560 B1**
(45) Date de publication et mention de la délivrance du brevet: **11.12.2024**
(21) Numéro de dépôt: 22183515.0
(22) Date de dépôt: 07.07.2022
(51) Int. Cl.: B23K 26/342, B23K 26/00, B23K 26/03, B23K 26/06, B23K 103/04, B23K 103/14

(54) **PROCÉDÉ DE FABRICATION ADDITIVE UTILISANT UNE SOURCE D'ÉNERGIE FOCALISÉE, LEDIT PROCÉDÉ ÉTANT RÉGULÉ EN FONCTION DE L'INTENSITÉ D'UN COURANT DE COMMANDE DE LADITE SOURCE D'ÉNERGIE FOCALISÉE**
VERFAHREN ZUR ADDITIVEN FERTIGUNG UNTER VERWENDUNG EINER GEBÜNDELTEN ENERGIEQUELLE, WOBEI DAS VERFAHREN IN ABHÄNGIGKEIT VON DER STÄRKE EINES STEUERSTROMS DER GEBÜNDELTEN ENERGIEQUELLE GEREGELT WIRD
ADDITIVE MANUFACTURING METHOD USING A FOCUSED POWER SOURCE, SAID METHOD BEING CONTROLLED ACCORDING TO THE INTENSITY OF A CONTROL CURRENT OF SAID FOCUSED POWER SOURCE

(30) Priorité: 15.07.2021 FR 2107633
(43) Date de publication de la demande: 08.02.2023
(73) Titulaire: AIRBUS OPERATIONS (S.A.S.), 31060 Toulouse (FR)
(72) Inventeur: SICRE, Matthieu, 31060 TOULOUSE (FR)
(74) Mandataire: Fantin, Laurent

(56) Documents cités:
- WO-A1-2020/245633
- GB-A- 2 452 774

## Description

La présente demande se rapporte à un procédé de fabrication additive utilisant une source d'énergie focalisée, ledit procédé étant régulé en fonction de l'intensité d'un courant de commande de ladite source d'énergie focalisée. Plus particulièrement, l'invention se rapporte à un procédé de fabrication additive par dépôt de matière sous énergie focalisée appelé DED pour « Directed Energy Déposition » en anglais.

Dans le domaine aéronautique, certaines pièces en titane, comme une structure primaire d'un mât d'un réacteur, sont réalisées en assemblant plusieurs pièces complexes usinées dans des blocs de matière. Cette technique de fabrication est relativement longue et génère beaucoup de pertes de matière sous forme de copeaux de titane qui ne peuvent pas être réutilisés. Pour réduire la quantité de déchets, les procédés de fabrication additive permettent de réaliser des pièces en empilant des couches de matière les unes sur les autres.

Le brevet GB2452774 (décrivant le préambule de la revendication 1) propose un procédé de fabrication d'un tube en alliage de titane en faisant fondre un fil d'alliage de titane pour réaliser le tube couche par couche.

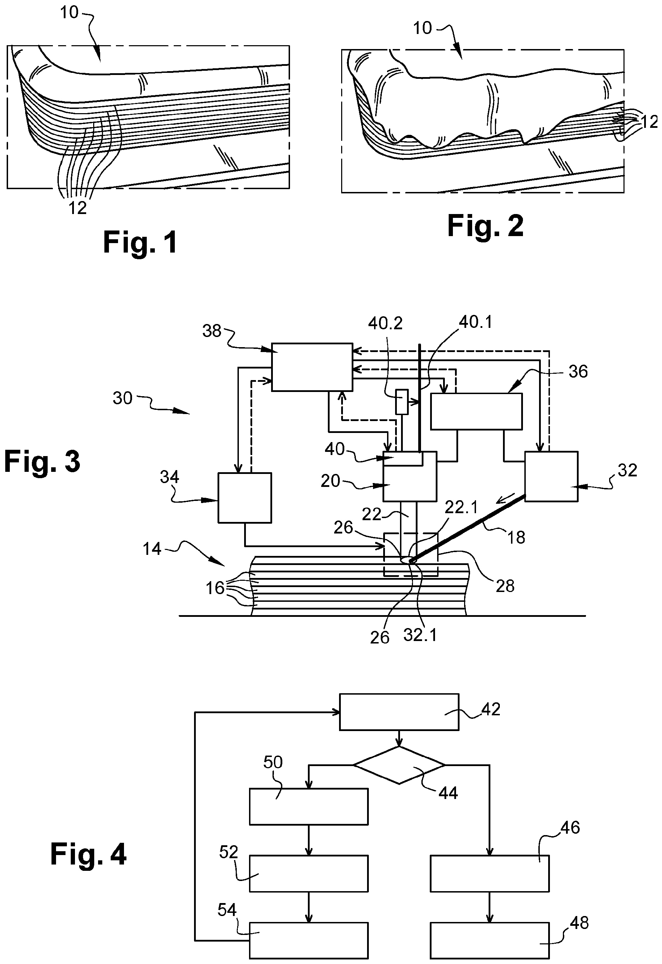

Selon un mode de réalisation illustré par la figure 1, une pièce 10 est réalisée en empilant des couches de matière 12 obtenue par fusion d'une matière en utilisant une source d'énergie focalisée, comme un faisceau laser, un faisceau d'électrons par exemple. Selon une technique dite par dépôt de matière sous énergie focalisée, la matière sous forme de poudre ou de fil est déposée simultanément à l'apport d'énergie.

Selon un mode opératoire, un fil en titane est dévidé au fur à mesure de l'avancement de la source d'énergie focalisée de manière à obtenir une superposition de cordons de matière. Lors d'essais de fabrication de pièces en titane par dépôt de matière sous énergie focalisée, un phénomène particulier d'emballement d'énergie, appelé également flash, survient de manière aléatoire et non contrôlée, entraînant la destruction du cordon de titane juste déposé et de la structure avoisinante, comme illustré sur la figure 2.

Alors que les niveaux d'énergie par unité de surface utilisés sont de l'ordre de 500 J/mm² pour obtenir un cordon régulier, les niveaux d'énergie par unité de surface sont compris entre 3000 J/mm² et 8000 J/mm² au moment d'un emballement d'énergie, ce qui conduit à la destruction du cordon de titane et de la structure avoisinante ainsi qu'à la mise au rebut de la pièce.

Cet emballement d'énergie restant un phénomène difficile à contrôler, cette technique de fabrication additive par dépôt de matière sous énergie focalisée ne peut pas être mise en oeuvre dans des procédés de fabrication de pièces en série.

La présente invention vise à remédier à tout ou partie des inconvénients de l'art antérieur.

A cet effet, l'invention a pour objet un procédé de fabrication d'une pièce en empilant des couches de matière obtenues chacune en déposant et fusionnant en continu une matière dans une zone d'impact ciblée par un faisceau d'énergie tel que défini dans la revendication 1.

Cet arrêt momentané du procédé de fabrication lorsque l'intensité du courant de commande dépasse un seuil donné permet de réduire significativement les risques d'emballement d'énergie.

Selon une autre caractéristique, le procédé de fabrication comprend une étape de reprise du procédé de fabrication lorsque l'intensité du courant de commande mesurée redevient inférieure au seuil donné.

Selon une autre caractéristique, lors de l'étape de reprise, la source d'énergie focalisée est commutée à l'état activé.

Selon une autre caractéristique, lors de l'étape de reprise, le système d'alimentation de matière est commuté à l'état activé.

Selon une autre caractéristique, si l'intensité du courant de commande surveillée est supérieure au seuil donné, le procédé de fabrication comprend une étape de désactivation de la source d'énergie focalisée lors de laquelle la source d'énergie focalisée est commutée à l'état désactivé, la source d'énergie focalisée et la pièce étant immobilisées l'une par rapport à l'autre ainsi qu'une étape de désactivation du système d'alimentation de matière lors de laquelle le système d'alimentation de matière est commuté à l'état désactivé, le système d'alimentation de matière et la pièce étant immobilisés l'un par rapport à l'autre.

Selon une autre caractéristique, les étapes de désactivation de la source d'énergie focalisée et du système d'alimentation de matière sont réalisées simultanément.

Selon une autre caractéristique, l'étape de surveillance de l'intensité du courant de commande est réalisée en continu.

Selon une autre caractéristique, le seuil donné est égal à l'intensité de fonctionnement augmentée d'un pourcentage correspondant à l'intensité de fonctionnement divisée par 10. D'autres caractéristiques et avantages ressortiront de la description de l'invention qui va suivre, description donnée à titre d'exemple uniquement, en regard des dessins annexés parmi lesquels :
- La figure 1 est une représentation d'une partie d'une pièce obtenue par un procédé de fabrication additive par dépôt de matière sous énergie focalisée sans emballement d'énergie,
- La figure 2 est une représentation d'une partie d'une pièce obtenue par un procédé de fabrication additive par dépôt de matière sous énergie focalisée avec un emballement d'énergie,
- La figure 3 est une représentation schématique illustrant un dispositif de fabrication pour la mise en oeuvre d'un procédé de fabrication additive par dépôt de matière sous énergie focalisée, et
- La figure 4 est un diagramme illustrant un procédé de fabrication additive par dépôt de matière sous énergie focalisée illustrant un mode de réalisation de l'invention.

Comme illustré sur la figure 3, un procédé de fabrication additive par dépôt de matière sous énergie focalisée permet d'obtenir une pièce 14 en empilant des couches de matière 16 obtenues en déposant en continu une matière 18 et en la fusionnant grâce à une source d'énergie focalisée 20.

Selon un mode opératoire, la source d'énergie focalisée 20 génère un faisceau d'énergie 22 présentant un point d'impact 22.1 dans une zone d'impact 24 située sur un substrat 26 et au niveau de laquelle est apportée la matière 18 sous la forme d'au moins un fil ou d'une poudre. Généralement, la zone d'impact 24 est située dans une atmosphère contrôlée 28 présentant au moins une caractéristique contrôlée parmi la composition gazeuse, la cinématique des gaz, la pression, la température par exemple.

Le substrat 26 peut être un support indépendant de la pièce 14 à réaliser ou une couche de matière 16 déjà déposée de la pièce 14.

Le faisceau d'énergie 22 peut être un faisceau laser, un faisceau d'électrons, un faisceau plasma ou autres.

Selon une configuration, les couches de matière 16 sont des cordons de matière.

Un dispositif de fabrication 30 pour la mise en oeuvre du procédé de fabrication comprend, en plus de la source d'énergie focalisée 20, un système d'alimentation de matière 32 configuré pour alimenter en un point d'alimentation 32.1 la zone d'impact 24 en matière 18, un système de gestion d'atmosphère 34 configuré pour gérer au moins une caractéristique de l'atmosphère contrôlée 28, au moins un système de déplacement 36 configuré pour déplacer le substrat 26, la source d'énergie focalisée 20 et/ou le système d'alimentation de matière 32 ainsi qu'un système de commande 38 configuré pour contrôler la source d'énergie focalisée 20, le système d'alimentation de matière 32, le système de gestion d'atmosphère 34 et chaque système de déplacement 36.

La source d'énergie focalisée 20 comprend une commande 40 permettant de contrôler au moins une caractéristique du faisceau d'énergie 22. La commande 40 est configurée pour contrôler un courant de commande présentant une intensité qui permet de contrôler au moins une caractéristique du faisceau d'énergie 22. Dans le cas d'une source d'énergie focalisée 20 et selon l'invention, le courant de commande correspond au courant électrique d'alimentation 40.1 de la source d'énergie focalisée 20. Selon un mode de réalisation, la commande 40 comprend un appareil de mesure 40.2 de l'intensité du courant électrique d'alimentation 40.1.

La source d'énergie focalisée 20 est configurée pour occuper un état activé dans lequel elle génère le faisceau d'énergie 22 et un état désactivé dans lequel elle ne génère pas le faisceau d'énergie 22.

Le système d'alimentation de matière 32 est configuré pour occuper un état activé dans lequel il alimente la zone d'impact 24 en matière 18 et un état désactivé dans lequel il n'alimente plus la zone d'impact 24 en matière 18.

Le système de gestion d'atmosphère 34 est configuré pour occuper un état activé dans lequel il régule au moins une caractéristique de l'atmosphère contrôlée 28 et un état désactivé dans lequel il ne régule aucune caractéristique de l'atmosphère contrôlée 28.

Chaque système de déplacement 36 est configuré pour occuper un état activé dans lequel il déplace la source d'énergie focalisée 20 et/ou le système d'alimentation de matière 32 et un état désactivé dans lequel la source d'énergie focalisée 20 et le système d'alimentation de matière 32 sont immobiles.

Selon un mode de réalisation, la matière 18 peut être du titane ou de l'Inconel^{®}. Elle se présente sous la forme d'un fil. Bien entendu, l'invention n'est pas limitée à ce mode de réalisation pour la matière 18.

Selon une configuration, le dispositif de fabrication 30 comprend un seul système de déplacement 36 supportant la source d'énergie focalisée 20 et le système d'alimentation de matière 32. Selon une autre configuration, le dispositif de fabrication 30 comprend un premier système de déplacement supportant la source d'énergie focalisée 20 ainsi qu'un deuxième système de déplacement supportant le système d'alimentation de matière 32. Selon une autre configuration, le dispositif de fabrication 30 comprend un système de déplacement configuré pour déplacer le substrat 26.

Lors du procédé de fabrication, un grand nombre de paramètres doivent être contrôlés et commandés pour que la couche de matière 16 déposée présente au moins une caractéristique attendue. Les caractéristiques attendues comprennent notamment des caractéristiques dimensionnelles, des caractéristiques mécaniques, des caractéristiques de santé de la matière.

Certains paramètres contrôlés et commandés sont relatifs à la source d'énergie focalisée 20, au faisceau d'énergie 22 et au système de déplacement 36 supportant la source d'énergie focalisée 20. A titre indicatif, les paramètres relatifs à la source d'énergie focalisée 20, au faisceau d'énergie 22 et au système de déplacement 36 supportant la source d'énergie focalisée 20 sont l'état activé/désactivé de la source d'énergie focalisée 20, la position du point d'impact 22.1 du faisceau d'énergie 22, la vitesse de déplacement du point d'impact 22.1 du faisceau d'énergie 22, la puissance, l'énergie, la fréquence et/ou l'impulsion du faisceau d'énergie 22 ainsi que la dimension du point d'impact 22.1. Cette liste de paramètres relatifs à la source d'énergie focalisée 20, au faisceau d'énergie 22 et au système de déplacement 36 supportant la source d'énergie focalisée 20 n'est pas exhaustive.

Certains paramètres contrôlés et commandés sont relatifs à la matière 18, au système d'alimentation de matière 32 et au système de déplacement 36 supportant le système d'alimentation de matière 32. A titre indicatif, les paramètres relatifs à la matière 18, au système d'alimentation de matière 32 et au système de déplacement 36 supportant le système d'alimentation de matière 32 sont la nature et les propriétés de la matière 18 utilisée, l'état activé/désactivé du système d'alimentation de matière 32, la position du point d'alimentation 32.1 ainsi que la vitesse de déplacement du point d'alimentation 32.1. Cette liste des paramètres relatifs à la matière 18, au système d'alimentation de matière 32 et au système de déplacement 36 supportant le système d'alimentation de matière 32 n'est pas exhaustive.

Certains autres paramètres contrôlés et commandés sont relatifs au système de gestion d'atmosphère 34.

Selon un mode de réalisation, le dispositif de fabrication 30 comprend une pluralité de capteurs configurés pour mesurer ou déterminer des valeurs de certaines caractéristiques relatives à la source d'énergie focalisée 20, à sa commande 40, au faisceau d'énergie 22, à la zone d'impact 24, à l'atmosphère contrôlée 28, au système d'alimentation de matière 32, au système de gestion d'atmosphère 34, au(x) système(s) de déplacement 36, les valeurs mesurées ou déterminées étant transmises au système de commande 38.

Selon un mode opératoire, le système de commande 38 comprend au moins une loi de commande permettant à partir de ces valeurs mesurées ou déterminées de contrôler ou commander la source d'énergie focalisée 20, le faisceau d'énergie 22, le système d'alimentation de matière 32, le système de gestion d'atmosphère 34, le (ou les) système(s) de déplacement 36.

Généralement, le système de commande 38 comprend plusieurs lois de commande.

En fonctionnement, le niveau d'énergie par unité de surface au niveau de la zone d'impact 24 est inférieur à 3000 J/mm². Généralement, ce niveau d'énergie par unité de surface est compris entre 40 J/mm² et 3000 J/mm².

Si le niveau d'énergie par unité de surface reste inférieur à un seuil donné, la couche de matière 16 est correctement formée et présente les caractéristiques attendues.

De manière aléatoire et inexpliquée, un emballement d'énergie lors duquel l'énergie par unité de surface est nettement supérieure à 3000 J/mm² et peut atteindre des valeurs proches de 8000 J/mm², peut survenir et perturber la formation de la couche de matière 16 qui ne présente plus alors les caractéristiques attendues.

Lors d'un emballement d'énergie, certains paramètres contrôlés et commandés divergent et deviennent hors de contrôle. Compte tenu du grand nombre de paramètres et de leurs interactions, il est très difficile de déterminer lequel a un rôle majeur dans ce phénomène d'emballement d'énergie et quelle mesure correctrice doit être mise en oeuvre.

Selon l'invention, le paramètre contrôlé pour éviter un phénomène d'emballement est l'intensité du courant de commande de la source d'énergie focalisée 20 qui doit rester en dessous d'un seuil donné. La mesure correctrice pour éviter l'emballement d'énergie est l'arrêt du procédé tant que l'intensité du courant de commande de la source d'énergie focalisée 20 est supérieure au seuil donné. Le procédé de fabrication reprend lorsque l'intensité du courant de commande redevient inférieure au seuil donné.

Selon un mode opératoire illustré sur la figure 4, le procédé de fabrication comprend une étape de surveillance 42 de l'intensité du courant de commande de la source d'énergie focalisée 20 ainsi qu'une étape de comparaison 44 de l'intensité du courant de commande surveillée avec le seuil donné.

Cette étape de surveillance 42 de l'intensité du courant de commande peut être réalisée quel que soit l'état activé ou désactivé de la source d'énergie focalisée 20, du système d'alimentation de matière 32 et/ou du (ou des) système(s) de déplacement 36.

Si l'intensité du courant de commande surveillée est inférieure au seuil donné, le procédé de fabrication comprend une étape de continuation 46 jusqu'à une étape finale 48 d'obtention de la pièce 14.

Si l'intensité du courant de commande surveillée est supérieure au seuil donné, le procédé de fabrication comprend une étape de désactivation 50 de la source d'énergie focalisée 20 lors de laquelle la source d'énergie focalisée 20 est commutée à l'état désactivé, la source d'énergie focalisée 20 et la pièce 14 étant immobilisées l'une par rapport à l'autre ainsi qu'une étape de désactivation 52 du système d'alimentation de matière 32 lors de laquelle le système d'alimentation de matière 32 est commuté à l'état désactivé, le système d'alimentation de matière 32 et la pièce 14 étant immobilisés l'un par rapport à l'autre, puis une étape de reprise 54 du procédé lorsque l'intensité du courant de commande surveillée redevient inférieure au seuil donné.

Selon un mode de réalisation, les étapes de désactivation 50, 52 de la source d'énergie focalisée 20 et du système d'alimentation de matière 32 sont réalisées simultanément.

Lors de l'étape de reprise 54, la source d'énergie focalisée 20, le système d'alimentation de matière 32 et chaque système de déplacement 36 sont commuté à l'état activé.

Cet arrêt momentané du procédé de fabrication lorsque l'intensité du courant de commande dépasse un seuil donné permet de réduire significativement les risques d'emballement d'énergie.

Selon un mode opératoire, l'étape de surveillance de l'intensité du courant de commande est réalisée en continu.

Selon l'invention, le seuil donné est fonction d'une intensité de fonctionnement qui correspond à l'intensité du courant de commande utilisée lors du procédé de fabrication sans emballement d'énergie. Selon les modes de fabrication, cette intensité de fonctionnement est comprise par exemple entre 50 et 300 mA.

Selon un mode de réalisation, le seuil donné est égal à l'intensité de fonctionnement augmentée d'un pourcentage correspondant à l'intensité de fonctionnement divisée par 10. Ainsi pour une intensité de fonctionnement de l'ordre de 50 mA, le seuil est égal à 50 + 5%, soit 52,5 mA. Pour une intensité de fonctionnement de l'ordre de 300 mA, le seuil est égal à 300 + 30%, soit 390 mA.

## Revendications

1. Procédé de fabrication d'une pièce (14) en empilant des couches de matière (16) obtenues chacune en déposant et fusionnant en continu une matière (18) dans une zone d'impact (24) ciblée par un faisceau d'énergie (22), la matière (18) provenant d'un système d'alimentation de matière (32) configuré pour occuper un état activé dans lequel le système d'alimentation de matière (32) alimente la zone d'impact (24) en matière (18) et un état désactivé dans lequel le système d'alimentation de matière (32) n'alimente plus la zone d'impact (24) en matière (18), le faisceau d'énergie (22) étant émis par une source d'énergie focalisée (20) configurée pour occuper un état activé dans lequel la source d'énergie focalisée (20) génère le faisceau d'énergie (22) et un état désactivé dans lequel elle ne génère pas le faisceau d'énergie (22), le faisceau d'énergie (22) comportant au moins une caractéristique contrôlée par une intensité d'un courant de commande qui correspond au courant électrique d'alimentation (40.1) de la source d'énergie focalisée (20), **caractérisé en ce que** le procédé de fabrication comprend une étape de surveillance (42) de l'intensité du courant de commande, une étape de comparaison (44) de l'intensité du courant de commande surveillée avec un seuil donné qui est fonction d'une intensité de fonctionnement correspondant à l'intensité du courant de commande utilisée lors du procédé de fabrication sans emballement d'énergie ainsi qu'une étape d'arrêt du procédé de fabrication lorsque l'intensité du courant de commande est supérieure au seuil donné.

2. Procédé de fabrication selon la revendication précédente, **caractérisé en ce que** le procédé de fabrication comprend une étape de reprise (54) du procédé de fabrication lorsque l'intensité du courant de commande mesurée redevient inférieure au seuil donné.

3. Procédé de fabrication selon la revendication précédente, **caractérisé en ce que** lors de l'étape de reprise (54), la source d'énergie focalisée (20) est commutée à l'état activé.

4. Procédé de fabrication selon la revendication 2 ou 3, **caractérisé en ce que** lors de l'étape de reprise (54), le système d'alimentation de matière (32) est commuté à l'état activé.

5. Procédé de fabrication selon l'une des revendications précédentes, **caractérisé en ce que**, si l'intensité du courant de commande surveillée est supérieure au seuil donné, le procédé de fabrication comprend une étape de désactivation (50) de la source d'énergie focalisée (20) lors de laquelle la source d'énergie focalisée (20) est commutée à l'état désactivé, la source d'énergie focalisée (20) et la pièce (14) étant immobilisées l'une par rapport à l'autre ainsi qu'une étape de désactivation (52) du système d'alimentation de matière (32) lors de laquelle le système d'alimentation de matière (32) est commuté à l'état désactivé, le système d'alimentation de matière (32) et la pièce (14) étant immobilisés l'un par rapport à l'autre.

6. Procédé de fabrication selon la revendication précédente, **caractérisé en ce que** les étapes de désactivation (50, 52) de la source d'énergie focalisée (20) et du système d'alimentation de matière (32) sont réalisées simultanément.

7. Procédé de fabrication selon l'une des revendications précédentes, **caractérisé en ce que** l'étape de surveillance de l'intensité du courant de commande est réalisée en continu.

8. Procédé de de fabrication selon l'une des revendications précédentes, **caractérisé en ce que** le seuil donné est égal à l'intensité de fonctionnement augmentée d'un pourcentage correspondant à l'intensité de fonctionnement divisée par 10.

## Patentansprüche

1. Verfahren zum Herstellen eines Teils (14) durch Stapeln von Materialschichten (16), die jeweils durch kontinuierliches Ablagern und Verschmelzen eines Materials (18) in einer von einem Energiestrahl (22) anvisierten Aufprallzone (24) erhalten werden, wobei das Material (18) aus einem Materialzuführungssystem (32) kommt, das so eingerichtet ist, dass es einen aktivierten Zustand einnimmt, in dem das Materialzuführungssystem (32) die Aufprallzone (24) mit Material (18) versorgt, und einen deaktivierten Zustand einnimmt, in dem das Materialzuführungssystem (32) die Aufprallzone (24) nicht mehr mit Material (18) versorgt, wobei der Energiestrahl (22) von einer fokussierten Energiequelle (20) emittiert wird, die so eingerichtet ist, dass diese einen aktivierten Zustand einnimmt, in dem die fokussierte Energiequelle (20) den Energiestrahl (22) erzeugt, und einen deaktivierten Zustand einnimmt, in dem diese den Energiestrahl (22) nicht erzeugt, wobei der Energiestrahl (22) wenigstens ein Merkmal aufweist, das durch eine Stärke eines Steuerstroms gesteuert wird, der dem elektrischen Versorgungsstrom (40.1) der fokussierten Energiequelle (20) entspricht, **dadurch gekennzeichnet, dass** das Herstellungsverfahren einen Schritt der Überwachung (42) der Steuerstromstärke, einen Schritt des Vergleichs (44) der überwachten Steuerstromstärke mit einem gegebenen Schwellenwert, der von einer Betriebsstromstärke abhängig ist, die der bei dem Herstellungsverfahren ohne Energieüberlauf verwendeten Steuerstromstärke entspricht, sowie einen Schritt des Anhaltens des Herstellungsverfahrens aufweist, wenn die Steuerstromstärke über dem gegebenen Schwellenwert liegt.

2. Herstellungsverfahren nach dem vorhergehenden Anspruch, **dadurch gekennzeichnet, dass** das Herstellungsverfahren einen Schritt zur Wiederaufnahme (54) des Herstellungsverfahrens umfasst, wenn die gemessene Steuerstromstärke wieder unter den gegebenen Schwellenwert fällt.

3. Herstellungsverfahren nach dem vorhergehenden Anspruch, **dadurch gekennzeichnet, dass** während des Wiederaufnahmeschritts (54) die fokussierte Energiequelle (20) in den aktivierten Zustand geschaltet wird.

4. Herstellungsverfahren nach Anspruch 2 oder 3, **dadurch gekennzeichnet, dass** beim Wiederaufnahmeschritt (54) das Materialzuführungssystem (32) in den aktivierten Zustand geschaltet wird.

5. Herstellungsverfahren nach einem der vorhergehenden Ansprüche, **dadurch gekennzeichnet, dass**, wenn die überwachte Steuerstromstärke über dem gegebenen Schwellenwert liegt, das Herstellungsverfahren einen Schritt zum Deaktivieren (50) der fokussierten Energiequelle (20) aufweist, bei dem die fokussierte Energiequelle (20) in den deaktivierten Zustand umgeschaltet wird, wobei die fokussierte Energiequelle (20) und das Werkstück (14) relativ zueinander immobilisiert sind, sowie einen Deaktivierungsschritt (52) des Materialzuführungssystems (32) aufweist, bei dem das Materialzuführungssystem (32) in den deaktivierten Zustand umgeschaltet wird, wobei das Materialzuführungssystem (32) und das Werkstück (14) relativ zueinander immobilisiert sind.

6. Herstellungsverfahren nach dem vorhergehenden Anspruch, **dadurch gekennzeichnet, dass** die Schritte des Deaktivierens (50, 52) der fokussierten Energiequelle (20) und des Materialzuführungssystems (32) gleichzeitig durchgeführt werden.

7. Herstellungsverfahren nach einem der vorhergehenden Ansprüche, **dadurch gekennzeichnet, dass** der Schritt des Überwachens der Steuerstromstärke kontinuierlich durchgeführt wird.

8. Herstellungsverfahren nach einem der vorhergehenden Ansprüche, **dadurch gekennzeichnet, dass** der gegebene Schwellenwert gleich der Betriebsstromstärke zuzüglich eines Prozentsatzes ist, der der Betriebsstromstärke geteilt durch 10 entspricht.

## Claims

1. Method for manufacturing a component (14) by stacking layers of material (16) that are each obtained by depositing and melting, continuously, a material (18) in an impact zone (24) targeted by an energy beam (22), the material (18) coming from a material supply system (32) configured to occupy an activated state in which the material supply system (32) supplies the impact zone (24) with material (18) and a deactivated state in which the material supply system (32) no longer supplies the impact zone (24) with material (18), the energy beam (22) being emitted by a focused energy source (20) configured to occupy an activated state in which the focused energy source (20) generates the energy beam (22) and a deactivated state in which it does not generate the energy beam (22), the energy beam (22) having at least one feature controlled by a control current intensity which corresponds to the supply electric current (40.1) of the focused energy source (20), wherein the manufacturing method comprises a step (42) of monitoring the control current intensity, a step (44) of comparing the monitored control current intensity with a given threshold which is a function of an operating intensity corresponding to the intensity of the control current used during the manufacturing process without energy runaway and a step of stopping the manufacturing method when the control current intensity is above the given threshold.

2. Method for manufacturing as claimed in the preceding claim, wherein the manufacturing method comprises a resumption step (54) of the manufacturing method when the measured control current intensity falls back below the given threshold.

3. Method for manufacturing as claimed in the preceding claim, wherein, during the resumption step (54), the focused energy source (20) is switched to the activated state.

4. Method for manufacturing as claimed in claim 2 or 3, wherein, during the resumption step (54), the material supply system (32) is switched to the activated state.

5. Method for manufacturing as claimed in one of the preceding claims, wherein, if the monitored control current intensity is above the given threshold, the manufacturing method comprises a step (50) of deactivating the focused energy source (20) during which the focused energy source (20) is switched to the deactivated state, the focused energy source (20) and the component (14) being immobilized with respect to one another, and a step (52) of deactivating the material supply system (32) during which the material supply system (32) is switched to the deactivated state, the material supply system (32) and the component (14) being immobilized with respect to one another.

6. Method for manufacturing as claimed in the preceding claim, wherein the steps (50, 52) of deactivating the focused energy source (20) and the material supply system (32) are carried out simultaneously.

7. Method for manufacturing as claimed in one of the preceding claims, wherein the step of monitoring the control current intensity is carried out continuously.

8. Method for manufacturing as claimed in one of the preceding claims, wherein the given threshold is equal to the operating intensity increased by a percentage corresponding to the operating intensity divided by 10.
